(19) **Europäisches Patentamt**

**European Patent Office**

**Office européen des brevets**

(11) **EP 1 500 422 A1**

(12) **EUROPÄISCHE PATENTANMELDUNG**

(43) Veröffentlichungstag:
26.01.2005 Patentblatt 2005/04

(51) Int Cl.7: **B01D 39/02**

(21) Anmeldenummer: **04450148.4**

(22) Anmeldetag: **19.07.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **25.07.2003 AT 12042003**
**15.06.2004 AT 10172004**

(71) Anmelder:
- **Husz, Georg, Dipl. Ing. Dr.**
  **4592 Leonstein (AT)**
- **Grottenthaler, Franz Xaver**
  **4081 Hartkirchen (AT)**

- **Knoll, Günther, Dipl.-Ing.**
  **4050 Traun (AT)**

(72) Erfinder:
- **Husz, Georg, Dipl. Ing. Dr.**
  **4592 Leonstein (AT)**
- **Grottenthaler, Franz Xaver**
  **4081 Hartkirchen (AT)**
- **Knoll, Günther, Dipl.-Ing.**
  **4050 Traun (AT)**

(74) Vertreter: **Patentanwälte Barger, Piso & Partner**
**Mahlerstrasse 9**
**1010 Wien (AT)**

(54) **Filterkörper in Form eines als Filter wirkenden Bodenprofils zur Reinigung kontaminierter Oberflächenwässer**

(57)   Filterkörper in Form eines als Filter wirkenden, in die Landschaft integrierten, ein oder mehrere Bodenhorizonte (A-,B-,C-Lagen) umfassenden Bodenprofils zur Reinigung kontaminierter Oberflächenabflusswässer, der aus ein oder mehreren bestimmt ausgewählten Ausgangsmaterialien, gegebenenfalls aus ein oder mehreren bestimmt ausgewählten Zuschlagstoffen gebildet ist und definierte Kennwerte aufweist.

**EP 1 500 422 A1**

Printed by Jouve, 75001 PARIS (FR)

## Beschreibung

Die Erfindung bezieht sich auf einen Filterkörper in Form eines als Filter wirkenden, in die Landschaft integrierten, ein oder mehrere Bodenhorizonte (A-, B-, C-Lagen) umfassenden Bodenprofils zur Reinigung kontaminierter Oberflächenabflusswässer. Sie bezieht sich insbesondere auf einen Filterkörper, der sich zum kombinierten, schichtmäßigen Einsatz für die physikalische, physikochemische und biochemische Reinigung von kontaminierten Oberflächenabflusswässern eignet.

## I. Einleitung

Der Schutz des Grundwassers bzw. seiner Qualität hat weltweit Vorrang im Umweltschutz.
Im natürlichen Wasserkreislauf gibt es eine Phase der Reinigung: Es ist dies die Sickerungsphase des Wassers durch den Boden. Die Grundwasser- und damit die natürliche Trinkwasserqualität ist also eine Funktion der Filter- bzw. Reinigungskapazität des Bodens. Fast alle Wasserschutzfragen sind daher von der Bodenqualität abhängig. Böden haben damit unter anderen lebenswichtige Filterfunktionen.
Diese können in drei Haupt- Wirkungsbereiche eingeteilt werden:

   a) In die physikalische,
   b) die physiko- chemische und
   c) die biologische bzw. biochemische Filterwirkung

Im Zuge der sogenannten Versiegelung von Flächen, gehen immer mehr Böden mit Filterfunktion verloren, während die an diesen Flächen anfallenden Niederschlagswässer (Straßen, Dächer, Beton- und Asphaltflächen, Hofflächen, Wirtschaftswege im ländlichen Raum, Flughäfen, Großparkplätze und dergl.) meist in mehr oder weniger kontaminiertem Zustand versickert oder anderweitig entsorgt werden müssen.
Bevorzugte Behandlung für derartige, verschmutzte Niederschlagswässer ist die Versickerung,
**[0007]** Diese Anlagen funktionieren jedoch u. U. wie Konzentrationseinrichtungen für diese Wässer, was zur Akkumulation von Schadstoffen führen kann, die dann ihrerseits als Schadstoffquellen und nicht als ökologisch nachhaltige Senken wirken.
Es besteht daher der Trend zur größerflächigen Versickerung, wobei die Filtereigenschaften von natürlichen Böden benutzt werden sollen. Bei den "kleinflächigen" Versickerungsanlagen (Sickerbecken bzw. "Mulden" usw.) ist die Filterwirkung bzw. Filtereigenschaften des Bodenfilterkörpers besonders zu beachten, weil ja mehr verschmutztes Regenwasser auf geringerer Oberfläche gereinigt werden muss.

## II. Stand der Technik [1]:

Es gibt noch keine abgesicherte Bemessung, durch welches das Ziel der Reinigungsleistung, der Wirtschaftlichkeit und das Langzeitverhalten von Versickerungsanlagen optimiert werden kann. Dadurch treten einerseits Unsicherheiten in der ingenieurmäßigen Planung und Durchführung und andererseits ökologische Risiken auf. Gewährleistungen können nur schwer abgegeben werden und es besteht erhöhter Nachsorgebedarf. Die Auswahl der nötigen Materialien ist daher schwierig und oft steht ein gewünschtes Material nicht unmittelbar zur Verfügung weswegen es von großem Interesse ist, bedarfsbezogenes Filtermaterial auf den Markt zu bringen. Letzteres ist besonders für den belebten Teil solcher Filter der Fall, der für den Abbau organischer Schmutz- und Schadstoffe verantwortlich ist.
Die Gestaltung derartiger Anlagen ist aber auch schon wegen der Vielfalt der vorkommenden Verschmutzungsarten und -frachten nur schwer zu schematisieren und auch aus sonstigen naheliegenden Gründen individuell zu gestalten. Einheitlich für alle Anlagen sollte die naturnahe Gestaltung sein. Dies betrifft besonders die erwünschte Filterleistung, wie sie bei natürlichen Bodenprofilen beobachtet werden kann.

Üblich sind:

Versickerungsbecken, bei denen die der vesiegelten Fläche zugeteilte Versickrungdfläche etwa 1/15 oder 1/10 der Versiegelungsfläche ausmachen soll. Empfohlen werden dann noch Sickerungsgeschwindigkeiten von > 10 hoch minus 5 m/s und die Vorschaltung von Absatzbecken oder Mulden im Zulauf.

Muldenversickerung:

Bei diesen Anlagen ist das Verhältnis der angeschlossenen Versiegelungsfläche zur Versickerungsfläche < 15. Die Mulden sind für kurzeitigen Einstau ausgelegt, wobei die Einstauhöhe 30 cm nicht übersteigen sollte, um die Gefahr der Verschlickung zu begegnen.

Mulden - Rigolensysteme:

Bei diesem System ist in der Mulde nach unten anschließend noch eine sog. Rigole eingebaut, die das Sikkerwasser bei schwer durchlässigem Untergrund auffängt und über ein Rohrdränagesystem ableitet.

Schachtversickerung:

Diese Anlage erfordert eine rasche Durchflußgeschwindigkeit und eignet sich daher grundsätzlich nur für wenig verschmutztes Regenwasser. Sie bietet daher ökologisch keine große Sicherheit, weil die Schadstoffe ziemlich tief eindringen und langfristig das Risiko einer Grundwasserkontamination nicht ganz ausgeschlossen werden kann.

Flächenversickerung.

Hierher gehören auch Anlagen, die breitflächig auch entlang von Verkehrswegen oder anderen undurchlässigen Verbauungsflächen angelegt werden. Auch durchlässige Belege oder Filtersteine, die zur Befestigung von Flächen eingerichtet werden, können dazu gezählt werden, sofern die Filtration tatsächlich auch mit einem Reinigungseffekt verbunden ist, der die Kontamination von Grundwasser oder Perkolationswasser gewährleistet.

In der Literatur finden sich Hinweise zur Notwendigkeit der Reinigung von kontaminiertem Regenwasser und eine Reihe von Untersuchungen über die Wirksamkeit solcher Anlagen.

In einer Muldenanlage findet M.Schulze [2] (Braunschweig) nach sechsjährigem Betrieb keine Schadstoffakkumulation und auch keine Veränderung der Durchlässigkeit des Filterbodens.

D.Maas [3] berichtet, dass die Regenwasserbewirtschaftung (Hamburg) von steigender Bedeutung ist und die Kommunen dies als aktiven Beitrag zum aktiven Grundwasserschutz ansehen.

A.Nadler und E. Meißner [4] untersuchen 6 parallel angeordnete Bodenfilter um die beste Option für die Reinigung von Straßenwässern herauszufinden und kommen zu dem Schluß, dass zwar drei Jahre Beobachtungszeitraum nicht ausreichen, um nachhaltige Wirkungen eindeutig quantifizieren zu können, finden aber, dass bewachsener Oberboden bei flächiger Versickerung eine Grundwassergefährdung weitgehend ausschließen kann.

V. Pick et al., 2002 [5] untersuchten eine mehrstufige Schachtanlage als dezentrale Behandlung des anfallenden, kontaminierten Niederschlagswassers, wobei die Versuchsanlage über 21 Monate geprüft wurde. Es gab einen Absetzschacht und einen Filterschacht. Letzterer war mit Filterkies und gekörnter Aktivkohle beschickt. Es zeigte sich eine befriedigende Rückhaltung von Schwebstoffen und den an sie adsorbierten Kontaminantien. Für gelöste Stoffe war sie weniger deutlich. Als Hauptvorteil wird der geringe Platzbedarf und die Möglichkeit gewertet, den Filterkörper zeitgerecht auszutauschen.

U. Kasting, [6] untersucht verschiedene Substrate auf ihre Adsorptionsfähigkeit gegenüber Schwermetallen und Phosphat, indem er entsprechend "kontaminierte" Lösungen mit den Substraten ausschüttelt und diese Substrate auch in halbtechnischem Maßstab prüft. Das Forschungsvorhaben begründet sich auf die Tatsache, daß es "bislang wenig Hinweise zu Anforderungen, die an Filtersubstrate zu stellen sind" gibt. Die Autoren empfehlen als Beurteilungsgrundlage die Z0 - Richtwerte der LAGA 20 [8], welche die maximale Belastung für uneingeschränkte Nutzung angibt. Dabei sollen soweit als möglich die Eluatwerte verwendet werden. Es ist aber nachweislich gesichert, dass diese aus einem Feststoff/Wasser-Verhältnis von 1 zu 10 nach 24 Stunden Schüttelzeit gewonnenen Werte keinesfalls die realen Sickerwasserkonzentrationen im Kapillarsystem von Böden etwa im Zustand der vollen Wassersättigung wiedergeben. Durch alle theoretischen Arbeiten und praktische Erfahrungen zieht sich die gemeinsame Erkenntnis durch, dass Filterkörper vielseitig wirken sollten und dass bewachsenes Oberbodenmaterial in einem gegebenen Profil die Hauptfilterwirkung aufweist. Aber es gibt derzeit weder quantifizierende Regelwerke noch quantifizierte, kausaltheoretische Zusammenhänge zwischen der Kontaminierungsart und dem Kontaminierungsgrad, sowie den baulichen Maßnahmen und der Art des Nachsorgebedarfes (Nachhaltigkeit und ökologische Standortkonformität [Stabilität]) der Anlage bzw. des Filterkörpers.

Diese fehlenden Kriterien werden durch die Quantifizierung der jeweiligen Anforderungen an die anpassungsfähigen Eigenschaften des aufzubauenden Filterkörpers geschaffen.

**III. Gegenstand der Erfindung:**

Die Erfindung betrifft einen Filterkörper in Form eines als Filter wirkenden, in die Landschaft integrierten, ein oder mehrere Bodenhorizonte (A-, B-, C-Lagen) umfassenden Bodenprofils zur Reinigung kontaminierter Oberflächenabflusswässer. Sie bezieht sich insbesondere auf einen Filterkörper, der sich zum kombinierten, schichtmäßigen Einsatz für die physikalische, physikochemische und biochemische Reinigung von kontaminierten Oberflächenabflusswässern bzw. verschmutzter Niederschlagswässer nach dem Vorbild natürlich gewachsener Böden eignet, wobei mittels definierter Parameter für spezielle Anforderungen besondere Bodeneigenschaften und/oder Durchlaßbarrieren geschaffen werden.

Aufgbabe der Erfindung ist nun die Schaffung eines solchen Filterkörpers, dem die aus dem Stand der Technik bekannten Nachteile nicht mehr anhaften und mit Hilfe dessen eine Reinigung kontaminierter Oberflächenabflusswässer in einfacher und effizienter Weise erzielbar ist.

Diese Aufgabe wird erfindungsgemäß dadurch gelöst, dass der Filterkörper aus ein oder mehreren nachfolgend genannten Ausgangsmaterialien, nämlich

- sandiger Lehm bis lehmiger Sand, (Bodenaushub, Baggergut, Bohrgut, mineralisches Abraummaterial)
- Humusabraum (organstoffhaltiges Oberbodenmaterial)
- Grünschnitt (Baum- und Strauchschnitt, Grasschnitt)
- Rindenmaterial
- Holz (einschließlich Altholz, zerkleinert)
- Papierfaserschlamm (Faser- und Ligninreststoffe der Papierindustrie)
- Sägespäne
- Sägemehl bzw. Holz-Schleifstaub
- Landwirtschaftliche Emterückstände
- Agroindustrielle Rückstände Rückstände
- Kommunaler Klärschlamm
- Gesteinsmehle,
- Mineralische Wasch-Schlämme aus der Schotteraufbereitung
- Flussschlämme und Teichschlämme
- Mineralische Stäube,
- Kohlestaub
- Tone (einschließlich Bentonit und Zeolith, bergfrisch oder verarbeitet)

und gegebenenfalls ein oder mehreren nachfolgend genannten Zuschlagstoffen, nämlich

- Rohgips ($CaSO_4.2H_2O$,)
- Kalk ($CaCO_3$)
- Dolomit oder dolomitischer Kalk [$CaMg(CO_3)_2$]
- Magnesit ($MgCO_3$)
- Kieserit ($MgSO_4.H_2O$)
- Bittersalz ($MgSO_4.7H_2O$)
- Rohphosphate
- Kaliumsulfat ($K_2SO_4$)
- Polyacrylamid

gebildet ist
und dass der Filterkörper nachfolgend genannte Kennwerte aufweist:

- Grobporen (>10$\mu$) = 20 bis 35 Vol.-%
- Mittelporen (10 bis 0,2$\mu$) = 13 bis 27 Vol.-%
- Feinporen (< 0,2$\mu$) = 8 bis 15 Vol.-%,
- Flockung der Kolloide in wässriger Suspension nach längstens 3
- Kh-Werte (Bindigkeitzahlen) je Horizont 30 bis 85
- Tongehalt 3 bis 30 %
- pH(KCl) oder pH($CaCl_2$) = 6,8 bis 8,5
- Kationenaustauschkapazität. LiCl- Methode: > 30. $BaCl_2$- Methode: >100, $CaCl_2$-Methode > 75 $mmol_C$/kg Trockenmasse (TM)
- wasserlösliche Ionen der Porengleichgeweichtslösung (Maximalwerte in mg/kg TM): Al = 0,71, As = 0,02, Na = 71, Cl =71, $PO_4$ = 0,5 Fe = 10, Mn =0,53, CN = 0,02, F = 0,53, $NO_2$ = 0,35, $NO_3$ = 18, Co = 1,0, Pb = 0,033, Cd = 0,003, Cr = 0,03, Cu = 0,06, Ni = 0,03, Hg = 0,001, Zn = 1,8 , B = 0,6, CN = 0,05, $NH_4$ = 0,33, $SO_4$ = 250, V = 0,06, Ti = 0,01, Se = 0,15, Mo = 0,018
- wasserlöslicher Kohlenstoff (DOC) bei Filteraustritt: < 250 mg/kg TM
- austauschbare Ionen: Ca, Mg, K, Na, $NH_4$, Al, H ausgedrückt in % der Katonenaustauschkapazität: A-Lage: Ca: 65 bis 90, Mg: 10 bis 20, K: 1,5 bis 6, Na: 0 bis 4, gegebenenfalls so vorhanden: B- und C-Lage: Ca: 70 bis 95, Mg: 5 bis 20, K: 0,2 bis 6, Na: 0 bis 3

- Kalkgehalt: 5 bis 80 %TM
- Humusgehalt für Filtererde: A-Lage: 3 bis 18%, gegebenenfalls, so vorhanden:für Filtersubstrate (B- bzw. C-Lage): bis 5%
- C/N-Verhätnis: 9 bis 16 (im Fall vorhandener organischer Substanz)
- Porengaszusammensetzung: $CO_2 : O_2 : CH_4$ = (1 bis 5) : (10 bis 20) : (<0,5) in der A-Lage und (2 bis 18) : (>2) : (<1) in der gegebenenfalls vorhandenen B- bzw. C-Lage im Zustand der halben Feldkapazität (Wassergehalt bei etwa 2 bar Kapillarspannung).

Damit ein Bodenprofil als vielseitiger, integraler Reinigungsfilter fungieren kann, müssen erfindungsgemäß derlei bestimmte Bodeneigenschaften vorliegen oder aufgebaut werden

Nach einer weiteren Ausgestaltung des Filterkörpers gemäß der Erfindung sind ein oder mehrere Zuschlagstoffe im den Filterkörper bildenden Material diffus verteilt oder als horizontale Barrieren eingebaut.

Entsprechend einem Merkmal der Erfindung weist der Filterkörper eine Filtermächtigkeit (Filterstrecke L) ausgedrückt in Metern (m) auf (gültig für eine Filterlage), die nach folgender Formel (I) berechnet ist:

$$L[m] = \frac{J \cdot SWA \cdot c}{SKs \cdot F \cdot d'} \qquad (I)$$

worin bedeutet:

J =        Anzahl der Jahre, die nötig ist, um den Filter mit einem bestimmten Stoff zu sättigen

SWA =    der jährliche Schmutzwasseranfall ($m^3$)

c =        Konzentration des untersuchten Stoffes im Schmutzwasser (mg/l)

SKs =    Bindungskapazität des Filtermateriales (mg/kg) für den untersuchten Stoff

F =        Filterfläche ($m^2$)

d' =        Trockenraumgewicht des Filtermaterials ($t/m^3$).

Unter Beachtung oben angegebener Parameter kann somit auf leicht nachvollziehbare und effiziente Weise allen Ansprüchen der jeweils gewünschten bzw. erforderlichen Reinigungsleistung eines Filterkörpers gerecht werdendes Bodenprofil hergestellt werden, was unter den bisher gegebenen Voraussetzungen entsprechend dem vorbekannten Stand der Technik nicht möglich war.

Nach einem weiteren Merkmal der Erfindung ist der Filterkörper dadurch gekennzeichnet, dass er einen oberen Teil (A-Lage) aus humosem bis humusfreiem Material mit einer Mächtigkeit von 10 bis 100 cm aufweist und der Unterboden (C-Lage) aus humusarmen bis humusfreien Material aufgebaut ist, wobei der Filterkörper in einer Profilmächtigkeit bis zu 2, 50 m eingebaut ist.

Nach einer erfindungsgemäßen Ausgestaltung des Filterkörpers sind in diesem Sonden für Kontrollzwecke und/oder Probeentnahmevorrichtungen eingebaut, mittels welcher zeitweilig oder kontinuierlich die Qualität des Sikkerwassers kontrollierbar ist.

Diese Parameter repräsentieren Bodeneigenschaften oder erlauben solche abzuleiten. Die Gruppierung der Parameter und die Einhaltung bestimmter Wertebereiche jedes einzelnen Parameters gewährleisten gemeinsam die gewünschte Reinigungsleistung.

Der Gegenstand der Erfindung einschließlich seiner erfindungsgemäßen Ausgestaltungen gelten grundsätzlich für alle Arten der Filteranlagen, in denen die Filterfunktion von Böden entscheidend ist.

**Physikalische Filterleistung:**

Hier geht es um die Rückhaltung partikulärer Verunreinigungen bzw. Schwebstoffe und die an ihnen sorbierten oder in Ihnen enthaltenen Stoffe. Über diese Funktionsleistung entscheidet im Wesentlichen die Porenverteilung des Filterbodens: In der Bodenkunde wird zwischen Grob-, Mittel-und Feinporen unterschieden:

- Weite Grobporen:        > 50 μm
- Enge Grobporen:        50 - 10 μm

- Mittelporen:      10 - 0,2 μm
- Feinporen:      < 0,2 μm

In den Grobporen findet die Sickerung, bzw. freie Wasserbewegung nach unten statt und es können nur Partikel mit einem Durchmesser von > 10 μm zurückgehalten werden. Nachhaltig schwebende Stoffe (Trübstoffe von Kolloidgröße) sind aber kleiner als 2μ, so dass im porengesättigtem Zustand suspendierte Stoffe bis zu einem Korndurchmesser von 10 μm durchbrechen. Schluff- und Tonfraktionen bleiben teilweise in den Mittelporen hängen. Dadurch kommt es theoretisch zu einer sogenannten Einlagerungsverdichtung bzw. relativen Verringerung der Sickerungsgeschwindigkeit [Verschiebung der Porengrößenverteilung zu Gunsten der Feinporen auf Kosten der Grobporen, was zur Einlagerunsverdichtung führt]) Im Freiland ist unter günstigen Voraussetzungen eine Bodendynamik im Gange, welche diese Verdichtung durch Kolloidflockung und Aggregatbildung einerseits und Bioturbation ( z. B. Regenwurmtätigkeit) andererseits teilweise hintanhalten.

**Physikochemische und chemische Filterleistung**

Diese wirkt vorwiegend durch Adsorptionsvorgänge, Fixierungsvorgänge durch sekundäre Schichtsilikate und durch Fällungsvorgänge.
Die Bereitstellung einer Mindestaustauschkapazität durch Tonkolloide und mineralorganische Komplexe (Ton-Humus-Komoplexe) sowie der Sesquioxyde und durch die funktionalen Gruppen der Huminsäuren ist für diese Art der Filterleistung ausschlaggebend. Die chemische Zusammensetzung der Bodenlösung, besonders auch der Anionen kontrolliert die Fällungsvorgänge.
Calciumkarbonat (Kalk) wird durch Säure zersetzt, puffert also die eingetragenen Säuren ab und vermindert gleichzeitig die Löslichkeit vieler Stoffe.
Demnach ist also ein bestimmtes Maß an Bodenmerkmalen für eine gute physikochemische Filter- bzw. Reinigungsleistung zu fordern:

- pH - Wert als Hinweis auf den Säurezustand des Filterkörpers
- Ionenaustauschkapazität zur Quantifizierung der Adsorptionsfähigkeit
- Wasserlösliche Ionen und austauschbare Ionen (Ba, Ca, Mg, K, Na, NH4, Fe, Mn, Cu, Zn, Co, Mo, Cr, Ni, Pb, Cd, Hg, V sowie As, BO3, NO3, SO4, Cl, PO4, SiO4, HCO3)
- Kalkgehalt,
- Humusgehalt (hier wegen seines wichtigen Anteils an funktionalen Gruppen, die zur Austauschkapazität gerechnet werden können)

**Biochemische Filterleistung:**

Eine unabsehbar große Zahl an Mikroorganismen - Arten und Bodenkleintieren sorgt für einen ununterbrochenen intensiven Stoffumsatz im Boden. Kaum ein organischer Stoff, der nicht als Ausgangsmaterial oder Energiequelle von einem der Biosysteme genutzt wird oder der nicht Ergebnis eines der Stoffwechselvorgänge wäre, und der nicht wieder Nahrungsquelle für andere Biosysteme ist. In dieser vorwiegend mikrobiologischbiochemischen Stoffumwandlungsdynamik gibt es aber doch auch "Endprodukte", wie etwa Kohlendioxid ($CO_2$), Wasser und Wärmeenergie oder Stoffe, die mehr und mehr stabil in dem gesamten Geschehen vorkommen und sich bis zu einem gewissen Grad anreichern: Es sind dies die Huminstoffe.
Im belebten Boden sind bei dafür günstigen Voraussetzungen also auf die Dauer nur bodentypische Stoffe beständig. Fremdkörper werden zersetzt und unter Energieabgabe und meist unter Sauerstoffbindung zu bodeneigenen Stoffen umgebildet. Darauf beruht im Wesentlichen die Selbstreinigungs- und Hygienisierungsfunktion des belebten Oberbodens. Sie wird dadurch am besten gefördert, dass man die Lebensbedingungen der Mikroorganismen und der Bodentiere Fördert. Dazu gehört eine möglichst gleichmäßige Wasser- und Luftversorgung und eine physiologisch günstige Ionenkonzentration und - kombination in dem vorhandenen Bodenwasser, aber auch eine ständige Zufuhr von Kohlenstoff durch energiereiche organische Substanz, die durch die Photosynthesereaktion der Vegetationsdecke gesichert ist. Das ist auch der Grund, warum Filterflächen bevorzugt bewachsen sein sollten, weil dann eine Selbstregeneration und Selbstregulierung bei Störungen durch den Eintrag von organischen Fremdstoffen möglich ist (keine Akkumulation organischer Giftstoffe).
Die wichtigsten stofflichen Voraussetzungen für die biochemische Filterleistung bzw. zu seiner Beurteilung können durch folgende Parameter gekennzeichnet werden:

- Humusgehalt
- C:N - Verhältnis

- mineralischer Stickstoffanteil am Gesamtstickstoff bzw. Gehalt in der Bodenlösung und am Sorptionskomplex (NO3 und NH4(wasserl.), NH4(adsorbiert)
- lösliche organisch Substanz (DOC, oder als CSB = Chemischer Sauerstoffbedarf)
- Zusammensetzung des Porengases (Verhältnis von $O_2 : CO_2 : CH_4$)

**IV. Herstellung einer "Filtererde", eines "Filterbodens" , eines "Filtersubstrates" bzw. eines "Filterprofils" oder "Filterkörpers"**

**Definitionen und Arbeitsbegriffe:**

**Filtererde** und **Filterboden** sind als Synonyme anzusehen. Es ist ein Material, das die oben angegebenen und auch in Tab.1 quantifizierten Anforderungen (physikalischmechanische, chemische und mikrobiologischen Filterwirkung) erfüllt, organische Substanz enthält und mikrobiologisch aktiv ist.

**Filtersubstrate** sind solche, die die Anforderungen des Punktes III. und der Tab. 1 nur insofern erfüllen, als für sie keine wesentliche mikrobiologisch Tätigkeit vorausgesetzt wird. Es werden demnach keine Ansprüche an biochemische Filterreaktionen gestellt; dafür können sie, je nach Bedarf, für Spezialfunktionen (zB. Barrieren für spezielle Stoffe) aufbereitet werden.

**Filtermaterial** = Sammelbegriff für Filtererde und Filtersubstrat

**Filterprofil** bezeichnet den Aufbau und die Schichtung des Filterkörpers aus als Filter wirkenden Erden und Filtersubstraten.

**Filterkörper** ist die gesamte Filtermasse innerhalb der Filteranlage

Nach dem erfindungsmäßigen Konzept sind nun die Filtermaterialien zum Aufbau eines Bodenprofils so zu gestalten, dass sie die oben erläuterten und in Tabelle 1 durch Wertebereiche quantifizierten Funktionen erfüllen.

Dazu gibt es prinzipiell die Möglichkeit, dass

a) derartige Materialien auf dem Markt oder Abfallsektor existieren und nun nach den oben angegebenen Kriterien ausgewählt und zum Aufbau eines Filterprofils eingesetzt werden (Humusabraum, Bodenaushub, Sedimentmaterial etc.)

b) die Materialien speziell mit den Zielvorgaben der Tabelle 1 erzeugt werden.

c) beim Aufbau eines Filterprofils sowohl Material aus der Stoffgruppe a) wie b) verwendet wird.

Von diesen drei Möglichkeiten bedarf die Gruppe b) einer besonderen Erläuterung, da die zielgerichtete Herstellung von Filtererden und Filtersubstraten im Sinn der Erfindung besonderen Kriterien folgen muß:

**Verfahren zur Herstellung von Filtererden (Filterkörpern)**

**1) Auswahl der Ausgangsmaterialien:**

Diese müssen sinnvoller Weise so ausgewählt werden, daß sie selbst oder nach Mischung und/oder physikochemischer, chemischer und biologischer Reaktion (wobei sie sich selbst durch Bildung neuer Stoffe teilweise oder ganz verbrauchen) den oben angegebenen Bedingungen bzw. der Tabelle 1. entsprechen. Als solche Stoffe kommen z.B. in Frage:

Organstoffhaltige Stoffe:

Grünschnitt
Strauch und Baumschnitt, gehäckselt
Sägespäne, Rinden, Holzschreddermaterial
landwirtschaftliche Emterückstände (zerkleinert)
Gemüseabfälle
Papierfaserschlämme
kommunale Klärschlämme
Komposte
landwirtschaftliche Wirtschaftsdünger
Zerkleinertes Altpapier
Rübenschnitzel

Melasse,

feste Rückstände aus Rübenwaschanlagen

Mutterboden-Material

Kohlen (gemahlen)

Mineralstoffe

Sande, Tone, Lehme (kalkhaltig und kalkfrei)

Aschen,

Waschschlämme aus Sand- und Schotterwerken,

diverse Gesteinsmehle

mineralischer Bodenaushub,

Feinkies,

Ziegelsplitt

Baureststoff- Recyclingmaterial

Zuschlagstoffe:

Kalk, Gips, Dolomit

Ammonsalze, Nitrate, Phosphate, Kalisalze, Kieserit, Bittersalz

Strukturbildende oder aggregatstabilisierende Stoffe einschließlich solcher aus Kunststoffen

Spezielle Adsorptionsstoffe, wie Zeolithe, Schichtsilikate, Aktivkohle, künstliche Ionenaustauscher oder hydrophobe Adsorbenten für organische Stoffe einschließlich Kohlenwasserstoffen.

**2) Analyse der Materialien**

Jeder Rohstoff wird nach der sogen. "Fraktionierten Analyse" [7] untersucht und beurteilt. Aus den verschiedenen Stoffen werden Reaktionsmischungen entsprechend ihrer reaktiven (= wasserlöslichen und austauschbaren) Fraktionen als Reaktionskomponenten und den jeweils aus der Mischrezeptur sich ergebenden Zuschlagstoffen versehen. Nach gründlichem Homogenisieren und Einstellen des Wassergehaltes, vorzugsweise Zwischen 20 und 40%, wird eine Fermentationstrommel beschickt oder eine Dreiecksmiete aufgelegt. Die Reaktionen setzen bei richtiger Mischung innerhalb von Stunden ein. Sie sind exotherm. Es werden Temperaturen von 50 bis 70°C erreicht.

Diese Materialmischung wird nun zur Qualitätssicherung analysiert. Die erhaltenen Analysenwerte müssen nun mit ausreichender Annäherung den Zielgrößen der Mischrezeptur entsprechen. Nach Abzug von 50 Gewichtsprozent der organischen Masse als der zu erwartende Massenverlust durch den Fermentationsprozess, können schon Prognosen auf die Endproduktqualität gemacht werden, wobei die Zielwerte in die Wertebereiche der Tab. 1 angestrebt werden. Sollten diese nicht im ersten Ansatz erreicht werden, kann durch Zuschlagstoffe oder Komponenten korrigierend eingegriffen werden. Nach Abklingen der biologische Umwandlungsintensität, erkenntlich am Abnehmen der Temperatur, wird wieder ein Kontrollanalyse gemacht, um sicher zu stellen, dass das Material sich den Zielvorgaben der Tab.1 tatsächlich annähert. Das Material kühlt schließlich auf Umgebungstemperatur ab, ist aber erst einsetzbar, wenn durch Befeuchtung desselben bis auf etwa 30% und gesicherter Durchlüftung keine wesentliche Wiedererwärmung (bis zu maximal 42°C tolerierbar) sattfindet. Nach Anpassung an die Raumtemperatur, sowie Messung der Porengase, kann die Stabilität hinsichtlich seiner Sollwerte überprüft bzw. abgeschätzt werden. Sodann kann ein Qualitätszertifikat ausgestellt werden, das als Gewährleistung der Filtererden-Qualität dienen kann.

Der so erzeugte Filterkörper erfüllt die Ansprüche, wie sie in Tab.1angeführt sind, und wird als Oberbodenmaterial im Bodenrprofil eingesetzt (A-Lage)

**3) Herstellung des Filtersubstrates:**

Dies geschieht durch Mischung von mineralischen Komponenten, die bis zu einer Gesamtmächtigkeit von maximal 1,8 m reichen kann. Auch hier wird die Mischung so angelegt, dass die geforderten oben angegebenen Wertebereiche erreicht werden. Bei diesen Mischungen werden nur physikochemische Reaktionen aber keine mikrobiologisch verursachten biologischen oder biochemischen Prozesse erwartet, weswegen organische Masse höchstens geringfügig und nur in stabiler Form vorliegen soll.

Das Filterprofil wird grundsätzlich nach dem Vorbild natürlich entstandener Böden aufgebaut. Wobei der belebte Oberboden in seiner Mächtigkeit durch die Sauerstoffversorgungstiefe limitiert ist. Diese kann bei gut strukturierten und drainierten Bodenprofilen bis zu einem Meter als gesichert angenommen werden. Natürliche Böden weisen oft weniger als 30 cm belebten Oberboden auf (A-Horizont, entspricht AS-Lage) und sind deswegen nicht selten in ihrer Filterleistung limitiert.

Der Mittelboden kann noch vom Unterboden differenziert werden, wenn eine Begründung dafür besteht (A-B-C-Profil). Ansonsten ist es aber auch möglich, den Unterboden durchgehend einheitlich zu gestalten (A-C-Profil, vergl. unten angegebenes schematisches Beispiel eines Filterprofils). Das Material kühlt schließlich auf Umgebungstemperatur ab, ist aber erst einsetzbar, wenn durch Befeuchtung desselben bis auf etwa 30% und gesicherter Durchlüftung keine wesentliche Wiedererwärmung (bis zu maximal 42 °C tolerierbar) stattfindet.

**Schematisches Beispiel eines Bodenprofils**

| A- Lage<br>0 - 40(60) cm | Humoses Oberbodenmaterial, das den Wertebereichen der Filterfunktionen entspricht |
|---|---|

| B- und C- Lage<br>40(60) -180(250) cm | Mineralischer Bodenaushub oder Mischungen aus Bodenaushüben |
|---|---|

A-, B- und C- Lagen liegen auf Untergrund [D-Lage; ab 180 (250) cm, bestehend aus Originalmaterial (Schotter) in ursprünglicher Lagerung] auf, der selbst nicht mehr zum Filterprofil gehört.

**V. Fallbeispiel:**

Aus einer Reihe von Möglichkeiten wurden aufgrund von Analysenergebnissen und Wirtschaftlichkeitsgründen folgende Ausgangstoffe zur Erzeugung einer Filtererde ausgewählt:

A = Kommunaler Klärschlamm ( Überschußschlamm, ausgefault, entwässert, stabilisiert)
B = Belebtschlamm ( flüssig)
C = Donausediment aus Überschwemmungsbereich (schluffig - toniger Sand, kalkreich, trocken)
D = Strauch- und Baumschnitt, gehäckselt
E = Holz, geschreddert

Die jeweiligen Anteile zur Mischung ( Mischrezeptur) wurde in Abhängigkeit der Analysenergebnisse so berechnet, dass

a) die notwendigen biochemischen und physikochemischen Reaktionen eintreten mußten und dass
b) das Endergebnis der Umwandlungsreaktionen den Wertebereichen entsprach, wie sie für die Filterfunktionen gefordert werden ( Pkt III. dieses Textes und Wertebereiche der Tab. 1).

Es ergab sich für den konkreten Fall nach Berücksichtigung des Trockenraum- und Frischraumgewichtes der einzelnen Komponenten ein Mischverhältnis der Frischvolumeinheiten von

A : B : C : D : E = 100 : 5 : 65 : 200 : 50 wobei aus Gründen der besseren Durchlüftbarkeit und zur Minderung des Maschinenverschleißes und der Energiekosten die Komponente C (Donausediment) zu etwa ¼ sofort und ¾ nach Abklingen der Hitzerotte verabreicht wurden. Durch letztere Maßnahme kann die thermophile Phase auch beschleunigt und damit Zeit gewonnen werden.

Nach Ansetzen einer Dreiecksmiete mit einem Querschnitt von etwa 3,5 m Basisbreite und 1,8 m Höhe erreichte die Miete nach 1 Woche über 60°C und fiel nach 2 Wochen auf 50 °C ab, um nach etwa 8 Wochen unter 30°C abzusinken.

Die Porengaszusammensetzung zeigt eine explosive Entwicklung und nachhaltige Intensität der mikrobiellen Lebenstätigkeit durch die hohen $CO_2$-Werte, die verkehrt proportional zum Sauerstoffparzialdruck verlaufen. Methan tritt praktisch nicht auf, was den aeroben Verlauf der Umsetzprozesse anzeigt.

Das Endergebnis ist der Tabelle 1 zu entnehmen (= erzielte Werte).

**Tabelle 1 Funktionsbezogene Bodenparameter zur Sicherstellung der Filterfunktionen**

| Physikalische Filterwirkung, (Rückhaltung partikulärer Verunreinigungen) | Einheit | Anzustrebende Wertbereiche | Erzielte Werte | |
|---|---|---|---|---|
| | | | A-Lage | B-und C-Lage |
| $K_H$-Wert (Bodenschwere) | - | 40 –120 | 100 | 85/75 |
| Grobporen (> 10µ,) | V % | 20 – 35 | 25 | 18 |
| Mittelporen.(10–0,2µm) | V % | 13-27 | 20 | 17 |
| Feinporen (< 0,2 µm) | V % | 8 – 15 | 10 | 15 |
| Flockungsneigung bzw. Flockung der Kolloide | | vollständige Flockung | vollst. | vollst. |
| Aggregatstabilität | | Hoch | hoch | hoch |
| | | | | |
| Relative vertikale $K_H$-Abfolge | (A-Lage):(B-Lage):(C-lage) | 1 : <1 : <(1 : <1) : | 1 : 0,85 : 0, 75 | |

| Physikochemische Filterwirkung (Adsorptions- und Fällungsreaktionen) | | | | |
|---|---|---|---|---|
| pH in KCl oder $CaCl_2$ | | 6,8 – 8,5 | 7,77 | 7,64 |
| Kationen-Austauschkapazität (KAK) | $mmol_c$/kg | >35* | 53 | 32 |
| Kationenbelegung des Sorptionskomplexes | A-Lage (% von KAK) | Ca = 65 - 90<br>Mg = 10 – 20<br>K = 2 – 6,<br>Na = 0 – 4 | 80<br>13<br>4<br>0,5 | |
| | B-u.C-Lage (%vonKAK) | Ca = 70–90<br>Mg = 5 – 20<br>K = 0,2 - 6<br>Na = 0 -- 3 | | 83<br>12<br>2<br>0,5 |
| Wasserlösl. Ionen (C-Lage, Unterkante) | mg/l Bodenlösung | <Grunwasser-Sollwerte | | entspre-chend |
| Kalkgehalt (CaCO3) | % | 5 -80 | 20,1 | 19,1 |
| Humusgehalt | A-Lage<br>B-Lage      %<br>C-Lage | 3 – 18<br><5<br><2 | 8,2<br>-<br>- | -<br>1,3<br>1,3 |
| | | | | |

| Biologische Filterwirkung: Biochemische Abbau und Umbauprozesse | | | | |
|---|---|---|---|---|
| Humusgehalt (A-Lage) | % | 3 – 18 | 8,2 | - |
| C:N-Verhältnis | | 10 – 14 | 13,8 | - |
| Mineralischer Stickstoff | mg/100g | < 10 | 3,5 | 4,7 |
| $NO_3$ in der Bodenlösung | mg/l | < 45 | 2,0 | 2,72 |
| Lösl. org Substanz (DOC, CSB) | mg/kg (Filter-Unterkante) | < 250 | - | <100 |
| Porengas-Zusasmmensetzung | Vol %:<br>A-Lage: $O_2 : CO_2 : CH_4$<br><br>B- und C-Lage:<br>$O_2 : CO_2 : CH_4$ | (10-20):(1–5):(<0,5)<br><br>( >2 ) : (<18) : ( <1 ) | 19 : 0,5 : <0,1 | 5 : 3 : 0 |

*gilt für Auszug mit 0,5 molarem LiCl. Bei Verwendung von $BaCl_2$: 100 und bei $CaCl_2$ : 75 $mmol_C/kg$

**VI. Anwendungsbeispiele zur Formel (I):**

Beispiel 1:

Ein Flächenfilter wird in einer einzigen Filterlage errichtet. Folgende Parameter werden bestimmt bzw. vorgegeben:

| | |
|---|---|
| Nachhaltigkeit der Filtewirkung,        (J) = | 128 Jahre |
| Schmutzwasseranfall        (SWA) = | 24 000 $m^3$ |
| Konzentration des limitierenden Stoffes | 0,5 mg/l |
| Im Sickerwasser bei voller Wassersättigung        (c) = | |
| Spezifische Sorptionskapazität des Filtermaterials        (SKs) = | 1970 mg/kg TS |
| Filterfläche        (F) = | 1000 $m^2$ |
| Trockenraumgewicht        (d') = | 1,3 t/$m^3$ |

Die Mächtigkeit des Filterkörpers (Filterstrecke L) ist nach Formel (I) zu berechnen:

$$L = \frac{J \cdot SWA \cdot c}{SKs \cdot F \cdot d'} = \frac{128 \cdot 24000 \cdot 0,5}{1970 \cdot 1000 \cdot 1,3} = 0,60 \text{ m}$$

Beispiel 2:

Ein Flächenfilter wird aus drei Filterlagen, vergleichbar einem Bodenprofil mit den Horizonten A (humoser Oberboden), B (schwach humoser Mittelboden) und C (humusfreier Unterboden) aufgebaut.
Die Filter-Nachhaltigkeit (J) soll 100 Jahre betragen. Die A- Lage soll 60 cm Mächtigkeit nicht überschreiten, um die Sauerstoffversorgung in der gesamten A-Lage ist sicher zu stellen.
Variablen zur Berechnung von Filterkörpern ( A, B und C-Lagen) unterschiedlicher Mächtigkeit:

| Parameter/Variablen | Lage A | Lage B | Lage C | Gew. Mittel |
|---|---|---|---|---|
| J | 100 | 100 | 100 | |
| SWO | 25000 | 25000 | 25000 | |
| c | 0,8 | 0,8 | 0,8 | |
| $\Delta c1$ | 0,8 | | | |
| $\Delta c2$ | | 0,32 | | |
| $\Delta c3$ | | | 0,11 | |
| SKs | 2100 | 1050 | 800 | |
| F | 1200 | 1200 | 1200 | |
| d' | 1,30 | 1,42 | 1,50 | |
| Lt | 0,611 | 1,117 | 1,389 | |
| LA | 0,30 | | | |
| LtB | | 0,44 | | |
| LB | | 0, 30 | | |
| LtC | | | 0,19 | |
| LC | | | 0,20 | |

Anmerkung:

☐ Lt bedeutet die Filterstrecke (Lagen-Mächtigkeit) für den Fall, dass das jeweilige Lagenmaterial (A, B oder C) die gesamte Filterwirkung jeweils alleine übernehmen sollte.

☐ LA ist die geplante Filterlagenmächtifgkeit (Filterstrecke) der Lage 1. Sie ist in dem gegebenen Fall also niedriger als für den Fall, dass diese Lage für sich allein die gesamte Filterwirkung für 100 Jahre übernehmen sollte. Daher ist mit einem Durchbruch des beobachteten Elementes (Stoffes) schon früher zu rechnen und die Filterlage B bzw. C müssen dieses zurückhalten.

☐ LtB ist die Filterlagenmächtigkeit, die nötig wäre, um die gesamte, aus der Lage A durchkommende Elementmenge zurückzuhalten. Es muss aber nur der durchrechnende Anteil aus der Filterlage A zurückgehalten werden, wenn der Filterkörper aus nur 2 Lagen(A und B) bestünde. In diesem fall ergäbe sich eine Filtermächtigkeit für LtB von 0,44 m. Da aber eine dritte Filterlage vorgesehen ist, kann diese entweder als zusätzliche "Reserve" dienen, in welchem Falle die Filterlage B 0,44 m mächtig sein müsste, oder sie wird mit 0,30 m begrenzt, dann muss der Rest der durchkommenden Elementmenge von der Filterlage C zurückgehalten werden.

☐ LB ist die geplante Filtermächtigkeit der B-Lage und soll 0,30 m betragen. Dann verbleibt eine durchkommende Elementmenge, die von der C-Lage zurückgehalten werden muss.

☐ Ltc ist die Filterlagenmächtigkeit, die nötig ist, um die restliche, aus der Lage B durchkommende Elementmenge zurückzuhalten. Sie wurde mit 0,19 m berechnet und wird aus praktischen und/oder Sicherheitsgründen vorteilhafter Weise in der Planung gerundet (LC = 0.20 oder 0,30 cm) ausgelegt.

Beispiel 3:

Für ein Filtermaterial mit der Filterstrecke 30 cm, bestehend aus belebtem Oberbodenmaterial oder Erde (A-Lage), ist die Nachhaltigkeit eines Filterbeckens (Filtermulde) zu berechnen (Nachhaltigkeit = Zeitdauer bis zur Filtersättigung, bei der der Filterkörper ausgetauscht werden muss).

Variable:

F = Filterfläche der Mulde 300 $m^2$

SWA =      2400 m$^3$/Jahr

c =      Schmutzwasserkonzentration des limitierenden Elementes

(z.B. Zn) =      0,5 mg/l

SKs =      Spezifische Sorptionskapazität des Filterkörpers in Bezug auf Zink = (Bindungskapazität) = 500 mg/kg TS.

d' =      Trockenraumgewicht = 1, 42 t/m$^3$

Aus der Formel:

$$L = \frac{J \cdot SWA \cdot c}{SKs \cdot F \cdot d'}$$

ergibt sich:

$$J = \frac{L \cdot SKs \cdot F \cdot d'}{SWA \cdot c}$$

und daraus für den konkreten Beispielsfall:

$$J = \frac{0{,}30 \cdot 500 \cdot 300 \cdot 1{,}42}{2400 \cdot 0{,}5} = 53 \text{ Jahre}$$

Durch die Bezugnahme auf die nachfolgend angegebenen Literaturstellen bilden Offenbarung und der Inhalt derselben einen Bestandteil der vorliegenden Patentanmeldung.

VI.Literatur:

[1] *Anonym:* Behandlung von Niederschlagswässern, OWAV- Regelblatt 35 (Entwurf, Stand 21.6.2002), Vertrieb: Österreichisches Normungsinstitut, A 1020 Wien, Heinestraße Nr. 38, S 322-325

[2] *Schulze, Michael:* Schadstoffakkumulation in einer dezentralen Regenwasserversickerungsanlage, Korrespondenz Abwasser, 1998 (45) Nr.2

[3] *Naass, Dieter:* Regenwasserbewirtschaftung und Versickerung, Erfahrungen und Entwicklungen Korrespondenz Abwasser, 1999 (46) Nr.10, S.1536-38

[4] *Nadler, A. und Meißner, E.:* Ergebnisse einer Versuchsanlage zur Versickerung des Niederschlagswassers von Straßen. KA-Wasserwirtschaft, Abwasser, Abfall 2001 (48) Nr. 5, S. 624-638

[5] *Pick, V., Fettig, J., Miethe, M., Stüber (Höxter) K.:* Dezentrale Behandlung des Niederschlagsabflus-ses von Verkehrsflächen in einer mehrstufigen Schachtanlage. KA-Wasserwirtschaft, Abwasser, Abfall 2002 (49) Nr.3, S. 312-320

[6] *Kasting, U., Gameh, O. und Grottehusmann, D.:* Bodenfilteranlagen zur Reinigung von Abflüssen stark verschmutzter Verkehrsflächen (Auswahl geeigneter Bodensubstrate) KA-Wasserwirtschaft, Abwasser Abfall 32001 (48) Nr.: 9, S. 1274-84

[7] *Anonym:* ÖNORM (Vorschlag 2002) S 2122-2 und 3, Wien, Österreichisches Normungsinstitut.

[8] *Anonym:* Mitteilung der Lände r Arbeitsgemeinschaft Abfall (LAGA) 20, Anforderungen an die stoffliche Verwertung von mineralischen Reststoffen/Abfällen, 6. Nov. 1997

**Patentansprüche**

1. Filterkörper in Form eines als Filter wirkenden, in die Landschaft integrierten, ein oder mehrere Bodenhorizonte (A-, B-, C-Lagen) umfassenden Bodenprofils zur Reinigung kontaminierter Oberflächenabflusswässer, **dadurch gekennzeichnet, dass** der Filterkörper aus ein oder mehreren nachfolgend genannten Ausgangsmaterialien, nämlich

  - sandiger Lehm bis lehmiger Sand, (Bodenaushub, Baggergut, Bohrgut, mineralisches Abraummaterial)
  - Humusabraum (organstoffhaltiges Oberbodenmaterial)
  - Grünschnitt (Baum- und Strauchschnitt, Grasschnitt)

- Rindenmaterial
- Holz (einschließlich Altholz, zerkleinert)
- Papierfaserschlamm (Faser- und Ligninreststoffe der Papierindustrie)
- Sägespäne
- Sägemehl bzw. Holz-Schleifstaub
- Landwirtschaftliche Ernterückstände
- Agroindustrielle Rückstände
- Kommunaler Klärschlamm
- Gesteinsmehle,
- Mineralische Wasch-Schlämme aus der Schotteraufbereitung
- Flussschlämme und Teichschlämme
- Mineralische Stäube,
- Kohlestaub
- Tone (einschließlich Bentonit und Zeolith, bergfrisch oder verarbeitet)

und gegebenenfalls ein oder mehreren nachfolgend genannten Zuschlagstoffen, nämlich

- Rohgips (CaSO$_4$.2H$_2$O,)
- Kalk (CaCO$_3$)
- Dolomit oder dolomitischer Kalk [CaMg(CO$_3$)$_2$]
- Magnesit (MgCO$_3$)
- Kieserit (MgSO$_4$.H$_2$O)
- Bittersalz (MgSO$_4$.7H$_2$O)
- Rohphosphate
- Kaliumsulfat (K$_2$SO$_4$)
- Polyacrylamid

gebildet ist
und dass der Filterkörper nachfolgend genannte Kennwerte aufweist:

- Grobporen (>10$\mu$) = 20 bis 35 Vol.-%
- Mittelporen (10 bis 0,2$\mu$) = 13 bis 27 Vol.-%
- Feinporen (< 0,2$\mu$) = 8 bis 15 Vol.-%,
- Flockung der Kolloide in wässriger Suspension nach längstens 3
- Kh-Werte (Bindigkeitzahlen) je Horizont 30 bis 85
- Tongehalt 3 bis 30 %
- pH(KCl) oder pH(CaCl$_2$) = 6,8 bis 8,5
- Kationenaustauschkapazität. LiCl- Methode: > 30. BaCl$_2$- Methode: >100, CaCl$_2$-Methode > 75 mmol$_C$/kg Trockenmasse (TM)
- wasserlösliche Ionen der Porengleichgeweichtslösung (Maximalwerte in mg/kg TM): Al = 0,71, As = 0,02, Na = 71, Cl =71, PO$_4$ = 0,5 Fe = 10, Mn =0,53, CN = 0,02, F = 0,53, NO$_2$ = 0,35, NO$_3$ = 18, Co = 1,0, Pb = 0,033, Cd = 0,003, Cr = 0,03, Cu = 0,06, Ni = 0,03, Hg = 0,001, Zn = 1,8 , B = 0,6, CN = 0,05, NH$_4$ = 0,33, SO$_4$ = 250, V = 0,06, Ti = 0,01, Se = 0,15, Mo = 0,018
- wasserlöslicher Kohlenstoff (DOC) bei Filteraustritt: < 250 mg/kg TM
- austauschbare Ionen: Ca, Mg, K, Na, NH$_4$, Al, H ausgedrückt in % der Katonenaustauschkapazität: A-Lage: Ca: 65 bis 90, Mg: 10 bis 20, K: 1,5 bis 6, Na: 0 bis 4, gegebenenfalls so vorhanden: B- und C-Lage: Ca: 70 bis 95, Mg: 5 bis 20, K: 0,2 bis 6, Na: 0 bis 3
- Kalkgehalt: 5 bis 80 %TM
- Humusgehalt für Filtererde: A-Lage: 3 bis 18%, gegebenenfalls, so vorhanden: für Filtersubstrate (B- bzw. C-Lage): bis 5%
- C/N-Verhätnis: 9 bis 16 (im Fall vorhandener organischer Substanz)
- Porengaszusammensetzung: CO$_2$ : O$_2$ : CH$_4$ = (1 bis 5) : (10 bis 20) : (<0,5) in der A-Lage und (2 bis 18) : (>2) : (<1) in der gegebenenfalls vorhandenen B- bzw. C-Lage im Zustand der halben Feldkapazität (Wassergehalt bei etwa 2 bar Kapillarspannung).

2. Filterkörper nach Anspruch 1, **dadurch gekennzeichnet, dass** ein oder mehrere Zuschlagstoffe im den Filterkörper bildenden Material diffus verteilt oder als horizontale Barrieren eingebaut sind.

3. Filterkörper nach Anspruch 1 oder 2, **dadurch gekennzeichnet, dass** er eine Filtermächtigkeit (Filterstrecke = L) ausgedrückt in Metern (m) aufweist, (gültig für eine Filterlage,) die nach folgender Formel (I) berechnet ist:

$$L[m] = \frac{J \cdot SWA \cdot c}{SKs \cdot F \cdot d'}$$ (I)

worin bedeutet:

J =      Anzahl der Jahre, die nötig ist, um den Filter mit einem bestimmten Stoff zu sättigen

SWA =   der jährliche Schmutzwasseranfall ($m^3$)

c =      Konzentration des untersuchten Stoffes im Schmutzwasser (mg/l)

SKs =    Bindungskapazität des Filtermateriales (mg/kg) für den untersuchten Stoff

F =      Filterfläche ($m^2$)

d' =     Trockenraumgewicht des Filtermaterials ($t/m^3$)

4. Filterkörper nach einem der Ansprüche 1 bis 3, **dadurch gekennzeichnet, dass** er einen oberen Teil (A-Lage) aus humosem bis humusfreiem Material mit einer Mächtigkeit von 10 bis 100 cm aufweist und der Unterboden (C-Lage) aus humusarmen bis humusfreien Material aufgebaut ist, wobei der Filterkörper in einer Profilmächtigkeit bis zu 2, 50 m eingebaut ist.

5. Filterkörper nach einem der Ansprüche 1 bis 4, **dadurch gekennzeichnet, dass** in diesem Sonden für Kontrollzwecke und/oder Probeentnahmevorrichtungen eingebaut sind, mittels welcher zeitweilig oder kontinuierlich die Qualität des Sickerwassers kontrollierbar ist.

**Europäisches Patentamt**

## EUROPÄISCHER RECHERCHENBERICHT

Nummer der Anmeldung

EP 04 45 0148

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 298 11 063 U (A & S HAECKSEL UND KOMPOSTIERU) 8. Oktober 1998 (1998-10-08) * das ganze Dokument * ----- | 1 | B01D39/02 |
| X | AU 724 038 B (BREWER ROY TUDOR) 7. September 2000 (2000-09-07) * Anspruch 1; Abbildung 1 * ----- | 1 | |
| X | AT 388 643 B (DEUTHNER KARL ING) 10. August 1989 (1989-08-10) * Zusammenfassung; Abbildung 1 * ----- | 1 | |
| A | DATABASE WPI Section Ch, Week 198533 Derwent Publications Ltd., London, GB; Class L02, AN 1985-198597 XP002300301 & HU 35 300 A (VIZGAZDALKODASI TUDOMANYOS KUT) 28. Juni 1985 (1985-06-28) * Zusammenfassung * ----- | | |
| A | US 2002/132099 A1 (SQUIRES TROY) 19. September 2002 (2002-09-19) * Zusammenfassung; Abbildungen 1,2 * ----- | | RECHERCHIERTE SACHGEBIETE (Int.Cl.7) B01D |
| A | US 4 768 897 A (GLASER EBERHARD ET AL) 6. September 1988 (1988-09-06) * Zusammenfassung; Abbildungen 1-8 * ----- | | |

Der vorliegende Recherchenbericht wurde für alle Patentansprüche erstellt

| Recherchenort | Abschlußdatum der Recherche | Prüfer |
|---|---|---|
| München | 12. Oktober 2004 | Sembritzki, T |

**ANHANG ZUM EUROPÄISCHEN RECHERCHENBERICHT**
**ÜBER DIE EUROPÄISCHE PATENTANMELDUNG NR.**            EP 04 45 0148

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-10-2004

| Im Recherchenbericht angeführtes Patentdokument | | Datum der Veröffentlichung | Mitglied(er) der Patentfamilie | | Datum der Veröffentlichung |
|---|---|---|---|---|---|
| DE 29811063 | U | 08-10-1998 | DE | 29811063 U1 | 08-10-1998 |
| AU 724038 | B | 07-09-2000 | AU | 724038 B2 | 07-09-2000 |
| | | | AU | 4021199 A | 24-02-2000 |
| AT 388643 | B | 10-08-1989 | AT | 271987 A | 15-01-1989 |
| HU 35300 | A | 28-06-1985 | HU | 35300 A2 | 28-06-1985 |
| US 2002132099 | A1 | 19-09-2002 | CA | 2440483 A1 | 26-09-2002 |
| | | | WO | 02075055 A1 | 26-09-2002 |
| US 4768897 | A | 06-09-1988 | DE | 3444895 A1 | 12-06-1986 |
| | | | GB | 2169781 A ,B | 23-07-1986 |
| | | | NL | 8503370 A | 01-07-1986 |

EPO FORM P0461

Für nähere Einzelheiten zu diesem Anhang : siehe Amtsblatt des Europäischen Patentamts, Nr.12/82